# EUROPÄISCHE PATENTSCHRIFT

(11) **EP 0 753 918 B1**
(45) Veröffentlichungstag und Bekanntmachung des Hinweises auf die Patenterteilung: **16.06.1999**
(21) Anmeldenummer: 96201833.9
(22) Anmeldetag: 01.07.1996
(51) Int. Cl.: H02G 3/06

(54) **Mit Zugentlastung versehenes Einführungselement für eine Dose**
Box entry element with pulling strain relief
Elément d'entrée de boîtier à relève de contrainte en traction

(30) Priorität: 11.07.1995 NL 1000778; 29.09.1995 NL 1001316
(43) Veröffentlichungstag der Anmeldung: 15.01.1997
(73) Patentinhaber: B.V. Kunststoffenindustrie Attema, NL-4203 NN Gorinchem (NL)
(72) Erfinder: Romijn, Jan, 4205 KM Gorinchem (NL)
(74) Vertreter: Mertens, Hans Victor

(56) Entgegenhaltungen:
- DE-A- 2 923 812
- NL-A- 8 200 809
- US-A- 5 422 437

## Beschreibung

Die Erfinding bezieht sich auf ein Einführungselement für eine elektrische Dose, wie eine Verbindungs- oder Kabeldose, mit einem im wesentlichen rohr- oder ringförmigen Körperteil, von dem ein von der Dose abzuwendendes Einführungsende entlang zumindestens einem Teil seines Umfangs mit Laschen versehen ist, die in einem spitzen Winkel mit der Innenwand des Körperteils ausgerichtet sind.

Ein derartiges Einführungselement ist aus der niederländischen Patentanmeldung 8200809 bekannt. Dieses im Spritzguss hergestellte Einführungselement aus Kunststoff hat starr mit der Innenwand des Körperteils verbundene Laschen, die, ab dem Einführungsende des Körperteils gesehen, d.h. dem offenen Ende des Körperteils, das zum Einführen eines Kabels vorgesehen ist, in den Körperteil gerichtet sind. Die freien Enden der Laschen begrenzen einen Durchgang, der kleiner als die Querabmessungen des einzufürenden Kabels ist. Beim Einführen des Kabels durch das Einführungselement biegen sich die freien Enden der Laschen deshalb einigermaßen zur Innenwand des Körperteils hin, wobei das Kabel passieren kann. Bei einer gegen die Einführungsrichtung auf das Kabel ausgeübten Kraft dringen die Laschen nach Art von Widerhaken in den Mantel des Kabels, wodurch das Kabel zurückgehalten wird und so eine Zugentlastung erzielt wird.

Bei der beschriebenen bekannten Ausführungsform des Einführungselementes ist es nachteilig, daß es nicht möglich ist, das Einführungselement gleichzeitig zum Einführen eines Rohres zu verwenden. Der Grund hierfür ist die sehr beschränkte Möglichkeit eines Biegens der freien Laschenenden durch ihre starre Verbindung mit der Innenwand des Körperteils. Der verfügbare Durchgang ist aufgrund dieses viel zu klein, um das Ende eines Rohres mit üblichen Abmessungen passieren zu lassen.

Ein zweiter Nachteil hängt mit dem Aufbau eines vollständigen Einführungselementes zusammen, von dem in der obenerwähnten Patentanmeldung nur ein Teil gezeigt ist. Dem der Dose zuzuwendenden Ende des vollständigen Einführungselementes ist normalerweise ein mitgegossener flexibler Kragen angeordnet, der ein eingeführtes Kabel zur Vorbeugung eines Eindringens von Staub und Feuchtigkeit in die Dose mehr oder weniger abdichtend umfaßt. Das Vorhandensein sowohl des Kragens, als auch der Laschen macht es praktisch unmöglich, das Einführungselement einstückig zu formen, da das Innere des Körperteils größtenteils unerreichbar für ein bei dem Formen anzuwendendes Schablonenteil ist. Es ist deshalb in dem beschriebenen Stand der Technik erforderlich, das Einführungselement aus zwei Teilen herzustellen, d.h. einem Teil, der die Laschen und einen Teil des Körperteils umfaßt und einem anderen Teil, der den Kragen und ein Restteil des Körperteils umfaßt. Beide Teile werden mit Hilfe einer Rastverbindung miteinander verbunden. Es wird deutlich sein, daß für die Herstellung des bekannten Einführungselementes zwei unterschiedliche Schablonen erforderlich sind, die je eine Teilkomponente ergeben, die später mit dem zugehörigen anderen Teil gekuppelt werden müssen. Dies ist aufwendig, arbeitsintensiv und teuer.

In dem Dokument DE- A- 29 23 812 ist ein Einführungselement beschrieben, bei dem elastische Laschen vorgesehen sind. Diese Laschen sind aber nicht parallel zu einer Tangente am Umfang des Einführungselements gelenkig angeordnet.

Der Erfindung liegt die Aufgabe zugrunde, obengenannte Nachteile aufzuheben en schafft dazu ein Einführungselement der eingangs genannten Gattung, das dazu gekennzeichnet ist, daß die Laschen gelenkig um eine Achse sind, die parallel zu einer Tangente an dem Umfang des Einführungsendes läuft. Die Gelenkachse kann sich auf der Endfläche des Einführungsendes des Einführungselementes befinden und zum Beispiel einem Teil des Randes des Einführungsendes folgen, jedoch kann sich auch in dem Körperteil in einigem Abstand des Randes des Einführungsendes befinden. Ein eingeführtes Kabel wird von den Laschen gesichert, d.h. ein Bewegen des Kabels in die Einführungsrichtung bleibt immer möglich, aber ein Bewegen des Kabels in entgegengesetzter Richtung wird behindert. Dies kann zum Beipiel dadurch erreicht werden, daß die bei dem durch das Körperteil Durchführen des Kabels weggedrückten Laschen um ihre Gelenkachse zurückfedern und dabei als Widerhaken fungieren. Also ist in einer schnellen und einfachen Weise eine Zugentlastung des Kabels erzielt worden. Die Befestigung der Laschen an dem Körperteil ermöglicht es weiter, daß die Laschen in bestimmten Ausführungsformen sich nahezu flach an der Innenwand des Körperteils um ein Scharnier drehen, wodurch bei beschränkten Außenabmessungen des Einführungselementes nicht nur ein Kabel, sondern auch ein Rohr eingeführt werden kann. Die Laschen werden für die Sicherung eines gerippten Rohres und zugleich für einige Sicherung eines glatten Rohres sorgen können, indem sie hierauf eine im wesentlichen radial gerichtete Klemmkraft ausüben. Ein wichtiger Vorteil der Gelenkigkeit der Laschenbefestigung ist die Möglichkeit, die Laschen außerhalb des Inneren des Körperteils während ihres Spritzgußverfahrens zu formen, und erst in einer späteren Phase in das Körperteil einzubringen. Dadurch kann sich ein Schablonenteil ohne Probleme in dem Körperteil des Einführungselementes während seiner Herstellung befinden, zum Beispiel zum Formen des obengenannten Kragens.

In einer bevorzugten Ausführungsform ist das Körperteil an seiner Innenwand mit einer Anzahl einwärts gerichteter Vorsprüngen versehen, von denen der Durchmesser des kleinsten einbeschriebenen Kreises in einer Fläche senkrecht zu der zentralen Achse des Körperteils größer ist als der maximale Durchmesser eines in das Einführungselement einzuführenden Kabels oder Rohres, wobei die Laschen in dem Körperteil bis an die Vorsprünge, oder zumindestens teilweise neben den Vorsprüngen um ein Scharnier drehen können. Also ist es in erster Linie möglich, daß die Vorsprünge sich außerhalb der Bahn der gelenkigen Laschen befinden. Die Vorsprünge fungieren dabei als Zentrierungselemente für ein in das Einführungselement einzuführendes Kabel oder Rohr, wobei die Laschen die Sicherung des Kabels oder Rohres versorgen.

Daneben bietet obengenannte Maßnahme die günstige Möglichkeit, daß zumindestens eine Lasche sich in dem Bereich zwischen der Gelenkachse der Lasche und dem der Gelenkachse abgewandten Ende der Lasche an zumindestens einen Vorsprung abstützt. Bei einer auf geeignete Weise gewählte Dimensionierung wird das freie Ende der Lasche von einem in das Einführungselement eingeführte Kabel of Rohr weggebogen werden und die obengenannte Widerhakenfunktion ausführen.

In einer anderen bevorzugten Ausführungsform stützt sich die Lasche an Ort und Stelle zumindestens eines Teiles der an die Gelenkachse grenzenden Seiten der Lasche an einen Vorsprung ab. Dies ist besonders einfach realisierbar, wenn die Vorsprünge die Form von sich parallel zu der zentralen Achse des Körperteils erstreckenden Rippen aufweisen. Für eine leichte Einführung des Kabels oder Rohres in das Einführungselement hat das auf das von Laschen versehene Ende des Körperteils ausgerichtete Ende jeder Rippe geringere radiale Abmessungen als der angrenzende Teil der Rippe.

Selbstverständlich ist es auch möglich, einen Vorsprung nicht oder nicht ausschließlich an der Innenwand des Körperteils anzuordnen, sondern zumindestens eine Lasche an der der Innenwand des Körperteils zugewandten Seite mit zumindenstens einem Vorsprung zu versehen. Die Lasche kann sich über den Vorsprung an das Körperteil abstützen, wobei, insbesondere wenn der Vorsprung sich im Bereich zwischen der Gelenkachse der Lasche und dem der Gelenkachse abgewandten Ende der Lasche befindet, das freie Ende der Lasche von einem in das Einführungselement eingeführten Kabel oder Rohr weggebogen werden kann und so als Widerhaken funktioniert.

Die Vorsprünge an der Innenseite des Körperteils oder an der Lasche können auf vielerlei Weise ausgestaltet sein und zum Beispiel halbkugelförmig, polygonal oder rechteckig sein.

In einer bevorzugten Ausführungsform, in der das Einführungselement wahlweise mit Rippen versehen sein kann, ist das Körperteil an seiner Innenseite mit zumindestens einer Ausnehmung zum vollständigen oder partiellen Aufnehmen der Lasche versehen. So kann nahezu der gesamte Durchgang des Körperteils zum Einführen eines Kabels oder Rohres in das Einführungselement verfügbar sein.

In einer weiteren bevorzugten Ausführungsform weisen die Laschen jeweils unterschiedliche Längen auf, wobei hauptsächlich die kürzesten Laschen ein Kabel oder Rohr mit einem relativ großen Durchmesser gut sichern können, und namentlich die längsten Laschen ein Kabel oder Rohr mit einem kleineren Durchmesser gut sichern können.

Zum Erreichen einer guten Widerhakenfunktion ist das der Gelenkachse abgewandte Ende der Lasche an der der Innenwand des Körperteils abgewandten Seite abgeschrägt.

Das Einführungselement, das Mittel zum Verbinden des Einführungselementes mit einer Dose umfaßt, ist erfindungsgemäß in vorteilhafter Weise einstückig hergestellt, wobei die Laschen gleichzeitig geformt sind und ein Ganzes bilden mit dem Körperteil und den Mitteln für die Verbindung des Einführungselementes mit der Dose, dank der Gelenkigkeit der Laschen, die das Formen der Laschen außerhalb des Inneren des Körperteils gestattet. Deshalb ist eine Assemblage von Teilen nicht erforderlich, und ist eine einzige Schablone für die Herstellung des Einführungselementes ausreichend, wodurch die Kosten hierfür niedrig sind.

Die Erfindung wird nachfolgend anhand der beigefügten Zeichnung erläutert, in der:
- Fig. 1: ein erfindungsgemäßes Einführungselement in einem Längsschnitt nach der Linie I - I in Fig. 2 zeigt;
- Fig. 2: eine Obenansicht auf das Einführungselement der Figur 1 zeigt;
- Fig. 3: eine Untenansicht auf das Einführungselement nach Fig. 1 zeigt;
- Fig. 4: eine Variante des Einführungselementes nach Fig. 1 zeigt;
- Fig. 5: eine Seitenansicht, teilweise im Längsschnitt, eines Teiles eines erfindungsgemäßen Einführungselementes zeigt; und
- Fig. 6: eine Seitenansicht nach Pfeil VI einer Lasche des Einführungselementes nach Fig. 5 zeigt.

In den unterschiedlichen Figuren beziehen sich die gleichen Bezugszeichen auf die gleichen Teile oder die Teile mit einer gleichen Funktion.

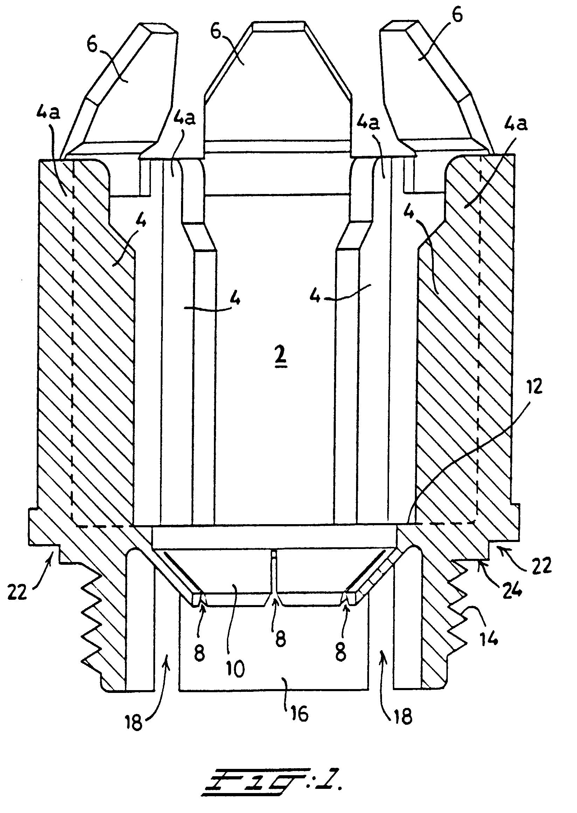

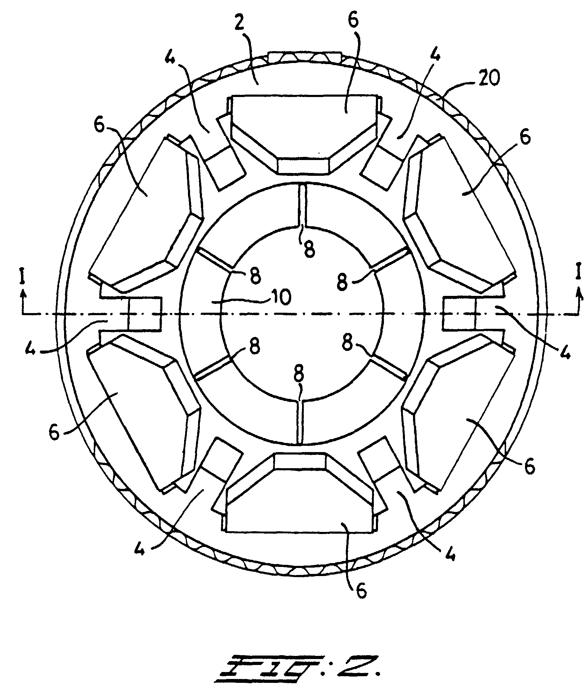

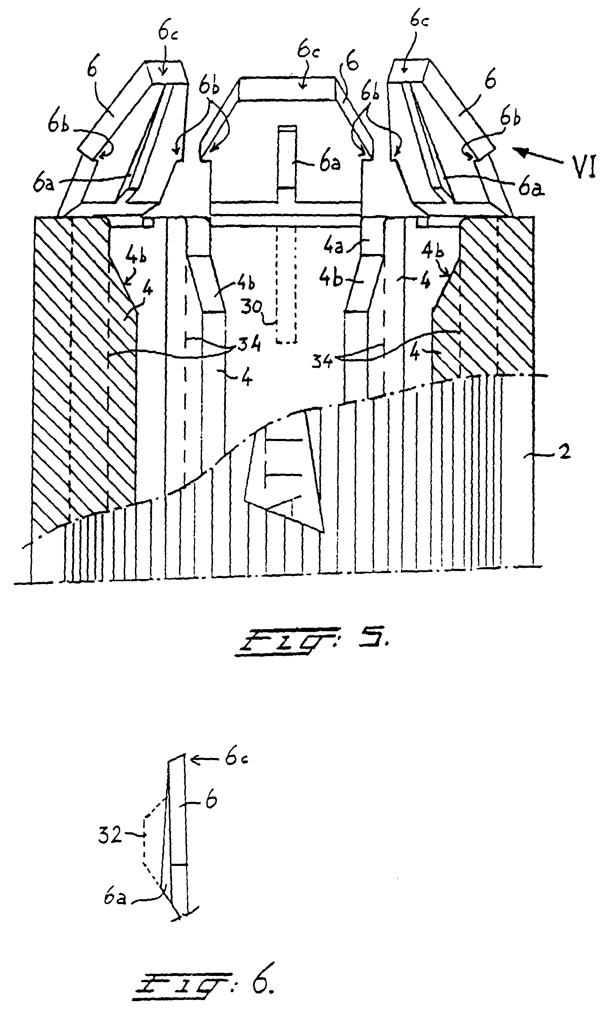

Fig. 1 bis 3 zeigen ein Einführungselement mit einem im wesentlichen rohrförmigen Körperteil 2, wo an dessen Innenseite entlang dem Umfang eine Anzahl, in diesem Fall sechs, axial ausgerichteter Rippen 4 angeordnet sind. Die Rippen 4 weisen einen rechteckigen Querschnitt auf und erstrecken sich in radiale Richtung über einigen Abstand auf die zentrale Achse des Körperteils. In der Nähe eines Endes des Körperteils 2, das zum Einführen eines Rohres oder Kabels vorgesehen ist, haben die Rippen 4 einen Teil 4a mit geringeren radialen Abmessungen als der übrige Teil der Rippen. Das Körperteil 2 ist an dem Ende der Teile 4a der Rippen 4 mit einer Anzahl, in diesem Fall sechs, Laschen 6 versehen, die sich jeweils aufgrund der Materialeigenschaften des Einführungselementes federnd um ein Scharnier bis in das Innere des Körperteils 2 um eine Achse drehen können, die in einem Teil der Lasche liegt, der mit einer geringen Stärke an das Körperteil 2 angrenzt und senkrecht auf die zentrale Achse des Körperteils 2 ausgerichtet ist. Die Laschen 6 bleiben dabei frei von den Rippen 4. In einer äußersten Lage liegen die Laschen 6 zwischen zwei angrenzenden Rippen 4 außerhalb eines zilinderförmigen Bereiches, der von den auf die zentrale Achse des Körperteils 2 ausgerichteten Seiten der Rippen 4 begrenzt wird.

Das Körperteil 2 ist an dem von den Laschen 6 abgewandten Ende mit einem im wesentlichen abgestutzt konischen, mit Einschnitten 8 versehenen Kragen 10 versehen, der einen im wesentlichen kreisförmigen Durchgang begrenzt, dessen Durchmesser erheblich kleiner ist als der von den Rippen 4 im Körperteil 2 bestimmten Durchgang. Das Körperteil 2 ist auf dem Übergang zum Kragen 10 mit einem stufenartigen Rand 12 versehen, der eine kreisförmige Öffnung begrenzt, deren Durchmesser zwischen der von den Rippen 4 begrenzten kreisförmigen Öffnung und der von dem Kragen 10 begrenzten kreisförmigen Öffnung liegt.

Der Kragen 10 ist in einem im wesentlichen rohrförmigen, mit einem Außengewinde 14 versehenen Zapfenende 16 angeordnet, in dem eine Anzahl, in diesem Fall vier, Einschnitte 18 angeordnet sind.

Das Körperteil ist über einem Teil seiner Außenoberfläche mit wellenartigen, parallel zu der zentralen Achse des Körperteils ausgerichteten Rippen 20 versehen. In der Nähe des Übergangs zwischen dem Körperteil 2 und dem Zapfenende 16 sind Ausnehmungen 22 angeordnet.

Das Einführungselement ist aus einem flexiblen und federnden Material hergestellt. Dank der gelenkigen Laschen ist es möglich, ein vollständiges, nicht aus Einzelteilen bestehendes Einführungselement in einem Schritt in einem Spritzgußverfahren herzustellen. Bei dem Spritzgußverfahren werden die Laschen einen durch die optimale Ausgestaltung der Spritzgußschablone bedingten Stand einnehmen und später in eine nachfolgend beschriebene Ausgangsposition für eine Montage des Einführungselementes gebracht werden. Dies alles ist dank der gelenkigen Verbindung zwischen den Laschen en dem Einführungselement möglich.

Der Gebrauch des in Fig. 1 bis 3 gezeigten Einführungselementes ist folgendermaßen: Das Einführungselement wird in einer Dose mit mit einem Innengewinde versehenen Öffnungen arretiert, indem das Zapfenende 16 des Einführungselementes einfach ohne Drehbewegung in die Öffnung der Dose gedrückt wird, wobei die Teile des eingeschnittenen Zapfenendes 16 sich radial einwärts verbiegen und das Gewinde 14 in axiale Richtung des Körperteils 2 entlang dem Gewinde der Dosenöffnung rattert, bis die Wand 24 des Einführungselementes sich in der Nähe, bzw. an der Wand der Dose befindet. Anschließend kann das Einführungselement von Hand in höchtens etwa einer Umdrehung in der Dosenöffnung festgedreht werden. Die Rippen 20 schaffen hierzu einen ausreichenden Griff. Hiermit ist die Anzahl Handlungen zum in einer Dose anordnen des Einführungselementes in bezug auf die konventionelle Art des Festschraubens des Einführungslementes erheblich beschränkt. Demzufolge wird bei der Montage Zeit gespart.

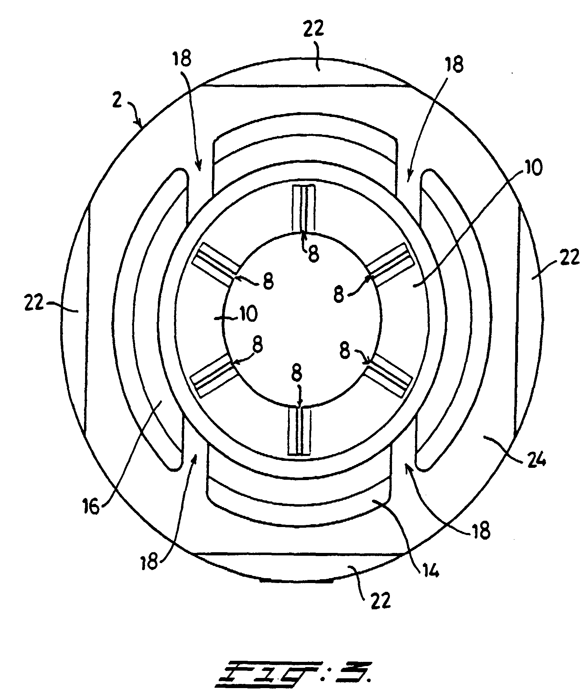

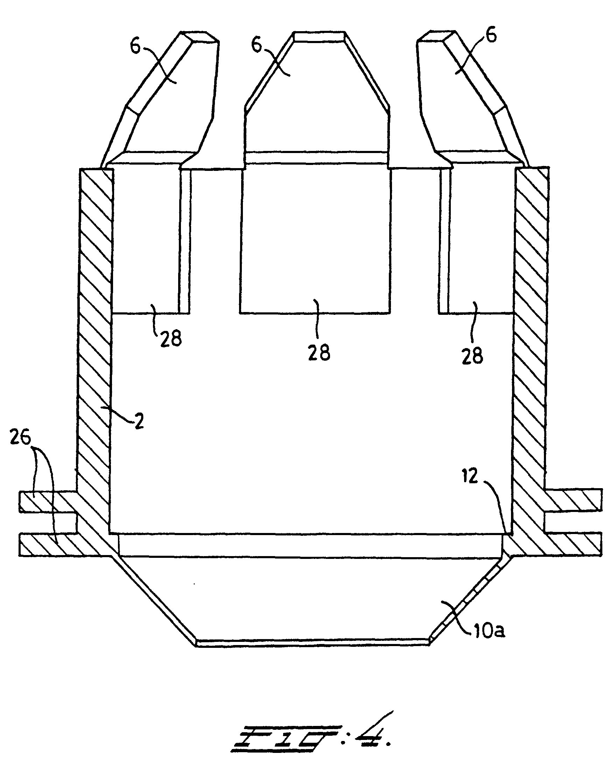

Die in den Fig. 1 und 2 gezeigte Lage der Laschen 6 wird nach der Herstellung und vor dem Gebrauch des Einführungselementes in eine Ausgangslage geändert, in der die Laschen 6 annähernd parallel zu einer Fläche, die senkrecht auf die zentrale Achse des Körperteils 2 ausgerichtet ist, verlaufen. Wenn erwünscht können die Laschen auch geringfügig in das Innere des Körperteils 2 ausgerichtet sein.

Wenn entlang den Laschen 6 und durch das Körperteil 2 ein Kabel durch das Einführungselement geführt wird, so werden die Laschen 6 sich federnd in dem Inneren des Körperteils 2 um ein Scharnier drehen und so als Widerhaken fungieren und verhindern, daß das Kabel sich in entgegengesetzter Richtung durch das Einführungselement bewegen kann. Wenn ein glattes Rohr ab der Seite der Laschen 6 in das Einführungselement geführt wird, so werden sich die Laschen 6 auf die Innenseite des Körperteils 2 zubewegen und sich - abhängig von dem Durchmesser des Rohres - gegebenenfalls bis zwischen die Rippen 4 um ein Scharnier drehen. Die Laschen 6 haben in einer derartigen Lage nur eine beschränkte Widerhakenfunktion. Das vordere Ende des Rohres stößt auf den Rand 12. Ein geripptes Rohr wird übrigens schon gut von den Laschen 6 in dem Einführungselement gesichert werden.

Das Einführen des Kabels oder Rohres in das Einführungselement wird durch die zentrierenden Teile 4a der Rippen 4 erleichtert.

Das Entfernen des Einführungselementes aus einer Dose kann einfach mit einem Schraubenzieher oder dergleichen erfolgen, indem dieser in eine Ausnehmung 22 gestellt wird und als Hebel gegen eine angrenzende Wand der Dose verwendet wird. Dabei werden sich die Teile des eingeschnittenen Zapfenendes 16 radial einwärts verbiegen, wodurch das Einführungselement in axiale Richtung ohne Schraubbewegung entfernt werden kann.

Die in Fig. 4 gezeigte Variante des erfindungsgemäßen Einführungselementes ist mit zwei Flanschen 26 versehen und dazu vorgesehen, in eine Ausnehmung einer Dosenwand geschoben zu werden, wobei die Ränder der Ausnehmung zwischen den Flanschen 26 aufgenommen werden. Das Einführungselement ist weiter mit einem Kragen 10a ohne Einschnitte versehen. Das Einführungselement ist an seiner Innenseite mit Ausnehmungen 28 versehen, die die Laschen 6 zumindestens teilweise aufnemen können. Das Einführungselement ist dadurch imstande, Rohre mit einem Außendurchmesser, der dem Innendurchmesser des Einführungselementes nahezu gleich ist, aufzunehmen.

Es ist auch möglich, die Länge der Ausnehmungen 28, in die Achsenrichtung des Einführungselementes gesehen, kleiner zu wählen als in Fig. 4 angedeutet, zum Beispiel bis an die unterbrochene Linie 28a. Hierdurch wird sich die auf die Innenwand des Körperteils 2 ausgerichtete Seite der Lasche 6 in einem spitzen Winkel mit der Innenwand an den Rand 28a der Ausnehmung abstützen können, wobei das freie, zapfenförmig zulaufende Ende der Lasche 6 von einem in das Einführungselement eingeführten Kabel oder Rohr zum Erzielen der bezweckten Widerhakenfunktion weggebogen werden kann.

Fig. 5 zeigt einen Teil eines Einführungselementes, dessen Körperteil 2 im wesentlichen wie das Körperteil des Einführungselementes nach Fig. 1 ausgestaltet ist. Die schräge Auflaufseite der Rippen 4 ist mit 4b bezeichnet. Die Laschen 6, die jeweils ungleiche Längen aufweisen, sind an der der Innenwand des Körperteils 2 zuzuwendenden Seite mit einer Rippe 6a versehen, die als Verstärkungsrippe dient. Während die Laschen 6 in einen spitzen Winkel zu der Innenwand des Körperteils 2 gebracht werden, werden sich ihre Seiten an Ort und Stelle der mit einem Pfeil 6b angedeuteten Bereiche an der Abkantung 4b der Rippen 4 anlegen. Die Lasche 6 wird hierdurch einen vorgegebenen minimalen Winkel mit der Innenwand des Körperteils 2 einschließen. Die Länge der Laschen 6 wird jetzt so gewählt, daß ihr freies Ende 6c durch ein in das Einführungselement eingeführtes Kabel oder Rohr weggebogen wird. Dank der auch durch die Rippe 6a bedingte Federung der Lasche 6, wird diese mit einer vorgegebenen Kraft zu ihrer Sicherung gegen das Kabel oder Rohr gedrückt.

Es wird deutlich sein, daß ein ähnliches Auflager, als das, welches durch die Zusammenwirkung der Teile 6b der Lasche 6 mit den Flächen 4b der Rippen 4 erzielt ist, erzeugt werden kann, indem die Innenwand des Körperteils 2 mit einem geeignet geformten Vorsprung versehen wird, wie in Fig. 6 beispeilsweise mit einer unterbrochenen Linie 30 angedeutet ist. Eine andere Möglichkeit, wahlweise in Verbindung mit den obenbeschriebenen Vorsprungsanordnungsmöglichkeiten, bietet der in Fig. 6 dargestellte Aufbau, bei dem beispielsweise mit einer unterbrochenen Linie 32 ein an der Lasche 6 angeordneter Vorsprung angedeutet ist.

Weiter zeigt Fig. 6 die Ausgestaltung des freien Endes 6c der Lasche 6, bei der durch die Anordnung einer Abschrägung eine gute, sichernde Wirkung auf ein Kabel oder Rohr erhalten wird.

Es sei noch bemerkt, daß für größere, in das Einführungselement einzuführende Kabel of Rohre, die Rippen 4 eine radiale Abmessung haben können, wie in Fig. 5 mit einer unterbrochenen Linie 34 angedeutet ist. Hierdurch kann sich die Lasche bis zu einem spitzeren minimalen Winkel als in der in Fig. 5 dargestellten Ausführung möglich ist, mit der Innenwand des Körperteils 2 um ein Scharnier drehen.

Es wird deutlich sein, daß die Zugentlastung mit erfindungsgemäßen gelenkigen Laschen mit beliebigen Mitteln zum Verbinden des Einführungselementes mit einer Dose kombiniert werden kann.

## Patentansprüche

1. Einführungselement für eine elektrische Dose, wie eine Verbindungs- oder Kabeldose, mit einem im wesentlichen rohrförmigen Körperteil (2), von dem ein von der Dose abzuwendendes Einführungsende entlang zumindestens einem Teil seines Umfangs mit Laschen (6) versehen ist, die in einem spitzen Winkel mit der Innenwand des Körperteils ausgerichtet sind, **dadurch gekennzeichnet**, daß die Laschen (6) gelenkig um eine Achse sind, die parallel zu einer Tangente an dem Umfang des Einführungsendes läuft.

2. Einführungselement nach Anspruch 1, dadurch gekennzeichnet, daß das Körperteil (2) an seiner Innenwand mit einer Anzahl einwärts ausgerichteter Vorsprünge (4) versehen ist, von denen der Durchmesser des kleinsten einbeschriebenen Kreises in einer Fläche senkrecht zu der zentralen Achse des Körperteils (2) größer ist als der maximale Durchmesser eines in das Einführungselement einzuführenden Kabels oder Rohres, und daß die Laschen (6) in dem Körperteil (2) bis an die, oder zumindestens teilweise neben den Vorsprüngen (4) um ein Scharnier drehen können.

3. Einführungselement nach Anspruch 2, dadurch gekennzeichnet, daß zumindestens eine Lasche (6) sich in dem Bereich zwischen der Gelenkachse der Lasche (6) und dem der Gelenkachse abgewandten Ende der Lasche (6) an zumindestens einen Vorsprung abstützt.

4. Einführungselement nach Anspruch 2 oder 3, dadurch gekennzeichnet, daß die Lasche (6) sich an Ort und Stelle zumindestens eines Teiles der an die Gelenkachse grenzenden Seiten der Lasche (6) an einen Vorsprung abstützt.

5. Einführungselement nach einem der Ansprüche 2 bis 4, dadurch gekennzeichnet, daß die Vorsprünge die Form von sich parallel zu der zentralen Achse des Körperteils erstreckenden Rippen (4) aufweisen.

6. Einführungselement nach Anspruch 5, dadurch gekennzeichnet, daß das auf das von den Laschen (6) versehene Ende des Körperteils (2) ausgerichtete Ende (4a) jeder Rippe (4) geringere radiale Abmessungen als der angrenzende Teil der Rippe hat.

7. Einführungselement nach Anspruch 1 oder 2, dadurch gekennzeichnet, daß zumindestens eine Lasche (6) an der der Innenwand des Körperteils (2) zugewandten Seite mit zumindestens einem Vorsprung versehen ist.

8. Einführungselement nach Anspruch 7, dadurch gekennzeichnet, daß der zumindestens eine Vorsprung sich in dem Bereich zwischen der Gelenkachse der Lasche (6) und dem der Gelenkachse abgewandten Ende der Lasche (6) befindet.

9. Einführungselement nach einem der Ansprüche 1 bis 8, dadurch gekennzeichnet, daß das Körperteil (2) an seiner Innenseite mit zumindestens einer Ausnehmung (28) zum vollständigen oder partiellen Aufnehmen der Lasche (6) versehen ist.

10. Einführungselement nach einem der Ansprüche 1 bis 9, dadurch gekennzeichnet, daß die Laschen (6) jeweils unterschiedliche Längen aufweisen.

11. Einführungselement nach einem der Ansprüche 1 bis 10, dadurch gekennzeichnet, daß das der Gelenkachse abgewandte Ende der Lasche (6) an der der Innenwand des Körperteils abgewandten Seite abgeschrägt ist.

12. Einführungselement nach einem der Anspüche 1 bis 11, das Mittel zum Verbinden des Einführungselementes mit einer Dose umfaßt, dadurch gekennzeichnet, daß die Laschen (6) integral mit dem Körperteil (2) und den Mitteln (16) zum Verbinden des Einführungselementes mit der Dose geformt sind.

13. Einführungselement nach einem der Ansprüche 1 bis 12, das zum Einführen eines Kabels, als auch eines Rohres ausgelegt ist.

## Claims

1. Lead-in element for an electrical box such as a junction box or cable box, having a substantially tubular member (2) of which a lead-in end which is to be facing away from the box is provided, over at least part of its circumference, with tongues (6) which are aligned at an acute angle with the inner wall of the member, characterised in that the tongues (6) are articulated about an axis which extends parallel to a tangent to the circumference of the lead-in end.

2. Lead-in element according to claim 1, characterised in that the member (2) is provided on its inner wall with a number of inwardly directed projections (4) of which the diameter of the smallest circle inscribed in a plane at right angles to the central axis of the member (2) is greater than the maximum diameter of a cable or tube to be introduced into the lead-in element, and in that the tongues (6) in the member (2) are able to rotate about a hinge up to or at least partially adjacent to the projections (4).

3. Lead-in element according to claim 2, characterised in that at least one tongue (6) rests on at least one projection in the region between the articulation axis of the tongue (6) and the end of the tongue (6) facing away from the articulation axis.

4. Lead-in element according to claim 2 or 3, characterised in that the tongue (6) rests on a projection at the site of at least part of the sides of the tongue (6) adjacent to the articulation axis.

5. Lead-in element according to one of claims 2 to 4, characterised in that the projections are in the form of ribs (4) extending parallel to the central axis of the member.

6. Lead-in element according to claim 5, characterised in that the end (4a) of each rib (4) directed towards the end of the member (2) provided with the tongues (6) has smaller radial dimensions than the adjacent part of the rib.

7. Lead-in element according to claim 1 or 2, characterised in that at least one tongue (6) is provided with at least one projection on the side facing the inner wall of the member (2).

8. Lead-in element according to claim 7, characterised in that the at least one projection is located in the region between the articulation axis of the tongue (6) and the end of the tongue (6) facing away from the articulation axis.

9. Lead-in element according to one of claims 1 to 8, characterised in that the member (2) is provided on the inside with at least one recess (28) for receiving all or part of the tongue (6).

10. Lead-in element according to one of claims 1 to 9, characterised in that the tongues (6) are all of different lengths.

11. Lead-in element according to one of claims 1 to 10, characterised in that the end of the tongue (6) remote from the articulation axis is chamfered on the side facing away from the inner wall of the member.

12. Lead-in element according to one of claims 1 to 11 comprising means for connecting the lead-in element to a box, characterised in that the tongues (6) are integrally formed with the member (2) and with the means (16) for connecting the lead-in element to the box.

13. Lead-in element according to one of claims 1 to 12, which is designed for the insertion of a cable or tube.

## Revendications

1. Élément d'insertion pour une prise électrique, telles une boîte de raccordement ou une prise de courant, comprenant un corps (2) de forme sensiblement tubulaire ou annulaire, dont une extrémité d'entrée, opposée à la prise, est munie de languettes (6) réparties au moins sur une partie de sa périphérie et disposées en formant un angle aigu avec la paroi intérieure du corps, caractérisé en ce que les languettes (6) s'articulent autour d'un axe qui est parallèle à une tangente à la périphérie de l'extrémité d'entrée.

2. Élément d'insertion selon la revendication 1, caractérisé en ce que la paroi intérieure du corps (2) est munie d'un certain nombre de saillies (4) orientées vers l'intérieur, avec lesquelles le diamètre du plus petit cercle inscrit dans une surface perpendiculaire à l'axe central du corps (2) est supérieur au diamètre maximal d'un câble ou tube à introduire dans l'élément d'insertion, et en ce que les languettes (6) peuvent pivoter autour d'une charnière vers l'intérieur du corps (2) jusqu'au niveau des saillies (4) ou au moins en partie à côté de celle-ci.

3. Élément d'insertion selon la revendication 2, caractérisé en ce qu'au moins une languette (6) vient en appui contre au moins une saillie dans la zone entre l'axe d'articulation des languettes (6) et l'extrémité des languettes (6) opposée à l'axe d'articulation.

4. Élément d'insertion selon la revendication 2 ou 3, caractérisé en ce que la languette (6) vient en appui sur place contre une saillie avec au moins une partie du côté de la languette (6) contigu à l'axe d'articulation.

5. Élément d'insertion selon l'une quelconque des revendications 2 à 4, caractérisé en ce que les saillies sont conçues sous forme de nervures (4) parallèles à l'axe central du corps.

6. Élément d'insertion selon la revendication 5, caractérisé en ce que l'extrémité (4a) de chaque nervure (4) orientée vers l'extrémité du corps (2) portant les languettes (6) présente des dimensions radiales inférieures à celles de la partie attenante de la nervure.

7. Élément d'insertion selon la revendication 1 ou 2, caractérisé en ce qu'au moins une languette (6) est munie d'au moins une saillie sur le côté opposé à la paroi intérieure du corps (2).

8. Élément d'insertion selon la revendication 7, caractérisé en ce que la saillie, au moins au nombre d'une, est située dans la zone entre l'axe d'articulation de la languette (6) et l'extrémité de la languette (6) opposée à l'axe d'articulation.

9. Élément d'insertion selon l'une quelconque des revendications 1 à 8, caractérisé en ce que le corps (2) est muni sur sa paroi intérieure d'au moins un évidement (28) destiné à recevoir une languette (6) entièrement ou en partie.

10. Élément d'insertion selon l'une quelconque des revendications 1 à 9, caractérisé en ce que les languettes (6) ne présentent pas toutes la même longueur.

11. Élément d'insertion selon l'une quelconque des revendications 1 à 10, caractérisé en ce que l'extrémité de la languette (6) opposée à l'axe d'articulation est taillée en biais sur le côté opposé à la paroi intérieure du corps.

12. Élément d'insertion selon l'une quelconque des revendications 1 à 11, qui comprend des moyens destinés à assembler l'élément d'insertion avec une prise, caractérisé en ce que les languettes (6) sont moulées intégralement avec le corps (2) et les moyens (16) destinés à assembler l'élément d'insertion avec la prise.

13. Élément d'insertion selon l'une quelconque des revendications 1 à 12, caractérisé en ce que ledit élément d'insertion est conçu pour y introduire un câble, de même qu'un tube.
